# EUROPEAN PATENT APPLICATION

(11) **EP 2 312 645 A1**
(43) Date of publication of application: **20.04.2011**
(21) Application number: 09766669.7
(22) Date of filing: 17.06.2009
(51) Int. Cl.: H01L 31/042

(54) **SOLAR CELL MODULE, MOUNT FOR SOLAR CELL MODULE, AND PHOTOVOLTAIC POWER GENERATION SYSTEM**

(30) Priority: 17.06.2008 JP 2008158460
(71) Applicant: Sharp Kabushiki Kaisha, Osaka-shi, Osaka 545-8522 (JP)
(72) Inventor: TERUNUMA, Miho, c/o Sharp Kabushiki Kaisha, Osaka-shi, Osaka 545-8522 (JP); OHKOSHI, Yasushi, c/o Sharp Kabushiki Kaisha, Osaka-shi, Osaka 545-8522 (JP)
(74) Representative: Müller - Hoffmann & Partner
(86) International application number: PCT/JP2009/061008
(87) International publication number: WO 2009/154221

(57) **Abstract**

A solar module according to an embodiment of the present invention includes a solar cell panel 2, main frame members 10 each including a main holder configured to hold the solar cell panel 2, sub-frame members 20 each including a sub-holder configured to hold the solar cell panel 2, a reinforcing frame member 30 provided to span between the main frame members 10, and a reinforcing-frame supporting member 40 provided to span between the sub-frame members 20 while intersecting the reinforcing frame member 30, and including a concave portion configured to straddle a bottom surface of the reinforcing frame member 30 from below at a portion where the reinforcing-frame supporting member 40 intersects the reinforcing frame member 30.

## Description

### Technical Field

The present invention relates to solar modules that hold a solar cell panel using a frame member coupled with a reinforcing frame member, solar module supports, and photovoltaic power generation systems.

### Background Art

Solar modules typically include a rectangular solar cell panel and a frame member for holding the solar cell panel. For the frame member used in the solar module, a variety of structures have been proposed.

Among the known frame structures is one that includes an outer wall that is vertically formed along an edge of the solar cell panel and a holder that is horizontally formed at an upper portion of the outer wall and has a U-shaped cross-section (see, for example, figures 2 and 5 in Patent Document 1). The edge of the solar cell panel is put into the holder with the U-shaped cross-section so that the solar cell panel is clamped by the holder, whereby a solar module is constructed.

In recent years, as the size of the solar module having such a frame member has been increasing, the solar cell panel has become easier to bend or warp significantly. Therefore, in many cases, a reinforcing frame member is used in addition to the frame member (see, for example, figures 1 and 4 in Patent Document 1). The reinforcing frame member is provided to span between a pair of frame members that hold two opposite edges of the solar cell panel, and supports the solar cell panel from below the lower surface of the solar cell panel.

Recently, a sudden gust of wind or the like is likely to occur due to a natural hazard, such as a typhoon or the like. Therefore, it is necessary to prevent the solar cell panel from being blown off by such a wind gust, or when the glass of the solar cell panel is broken by a stone carried by the wind, to prevent broken glass fragments from flying off.

To achieve this, in some solar modules, the reinforcing frame member that supports the solar cell panel from the lower surface of the solar cell panel has a bonding surface that is bonded with the lower surface of the solar cell panel using an adhesive. Therefore, the solar cell panel is fixed to the reinforcing frame member by the bonding surface being bonded with the lower surface of the solar cell panel (see, for example, figures 2 and 5 in Patent Document 1).
Patent Document 1: JP H09-148612A

### Disclosure of Invention

### Problem to be Solved by the Invention

The solar module is used in various environments. For example, the solar module may be used in snowy areas. A large-sized solar module with the aforementioned reinforcing frame member may have strength sufficient for environments other than the snow environment. The strength of such a solar module may, however, be insufficient when used in the snowy area.

There is a conventional solar module that has sufficient strength even in harsh environments, such as a snow environment and the like.

Such a solar module, however, has a dedicated structure, which is high in cost compared to typical solar modules.

Therefore, there has been a demand for a solar module that can be easily manufactured and installed at an installation site, whereby an increase in the manufacture time or installation time, an increase in cost, and the like can be prevented, by using in harsh environments such as in snowy areas the aforementioned solar module with the reinforcing frame member having sufficient strength in environments other than harsh environments, without significantly changing or modifying the structure of the solar module.

Therefore, the present invention has been made to meet the demand, and provides a solar module that is an adaptation of a solar module with a reinforcing frame member so that it can be used in snowy areas or the like without significantly changing or modifying the structure of the solar module, or a solar module support. The present invention also provides a solar module that can be easily manufactured and installed at an installation site, whereby an increase in the manufacture time or installation time, an increase in cost, and the like can be prevented, or a solar module support, and a photovoltaic power generation system.

### Means for Solving Problem

A solar module according to the present invention includes a rectangular solar cell panel including a pair of main edges and a pair of sub-edges adjacent to the main edges, a pair of main frame members, a pair of sub-frame members, and a reinforcing frame member.

Of them, the main frame members each include a main holder having a U-shaped cross-section and configured to clamp the corresponding main edge of the solar cell panel inside the U-shape to hold the solar cell panel, a main wall linked to a lower portion of the main holder and extending downward, and a main bottom piece provided on an inner surface of a lower portion of the main wall and protruding inward.

The sub-frame members each includes a sub-holder having a U-shaped cross-section and configured to clamp the corresponding sub-edge of the solar cell panel inside the U-shape to hold the solar cell panel, a sub-wall linked to a lower portion of the sub-holder and extending downward, and a sub-bottom piece provided on an inner surface of a lower portion of the sub-wall and protruding inward.

The reinforcing frame member is provided to span between the main frame members and configured to support a back surface of the solar cell panel.

The aforementioned solar module includes a reinforcing-frame supporting member provided to span between the sub-frame members while intersecting the reinforcing frame member and configured to abut a bottom surface of the reinforcing frame member from below to support the reinforcing frame member.

According to the aforementioned solar module, the reinforcing-frame supporting member is provided so that a main axis of the reinforcing-frame supporting member and a main axis of the reinforcing frame member intersect at different heights. Therefore, the reinforcing-frame supporting member can be provided to span between the sub-frame members while intersecting the reinforcing frame member, without changing or modifying the reinforcing frame member.

Therefore, in the aforementioned solar module including the reinforcing frame member, the reinforcing-frame supporting member can be attached to the solar module without significantly changing or modifying the structure of the solar module.

Therefore, the strength of the solar module including the reinforcing frame member can be improved without significantly changing or modifying the structure of the solar module. The solar module can be easily manufactured and installed at an installation site, and an increase in the manufacture time or installation time, an increase in cost, and the like can be prevented.

A solar module support according to the present invention is a support for use in a solar module that includes a rectangular solar cell panel including a pair of main edges and a pair of sub-edges adjacent to the main edges, a pair of main frame members, a pair of sub-frame members, and a reinforcing frame member.

A solar module for which the aforementioned solar module support is used includes a rectangular solar cell panel including a pair of main edges and a pair of sub-edges adjacent to the main edges, a pair of main frame members, a pair of sub-frame members, and a reinforcing frame member.

Of them, the main frame members each includes a main holder having a U-shaped cross-section and configured to clamp the corresponding main edge of the solar cell panel inside the U-shape to hold the solar cell panel, a main wall linked to a lower portion of the main holder and extending downward, and a main bottom piece provided on an inner surface of a lower portion of the main wall and protruding inward.

The sub-frame members each includes a sub-holder having a U-shaped cross-section and configured to clamp the corresponding sub-edge of the solar cell panel inside the U-shape to hold the solar cell panel, a sub-wall linked to a lower portion of the sub-holder and extending downward, and a sub-bottom piece provided on an inner surface of a lower portion of the sub-wall and protruding inward.

The reinforcing frame member is provided to span between the main frame members and configured to support a back surface of the solar cell panel.

In the aforementioned solar module support, a reinforcing-frame supporting member that is the solar module support is provided to span between the sub-frame members while intersecting the reinforcing frame member and configured to abut a bottom surface of the reinforcing frame member from below to support the reinforcing frame member.

According to the aforementioned solar module support, the reinforcing-frame supporting member that is the solar module support is provided so that the main axis of the reinforcing-frame supporting member and the main axis of the reinforcing frame member intersect at different heights. Therefore, the reinforcing-frame supporting member that is the solar module support can be provided to span between the sub-frame members while intersecting the reinforcing frame member, without changing or modifying the reinforcing frame member.

Therefore, the reinforcing-frame supporting member that is the solar module support can be attached to the aforementioned solar module including the reinforcing frame member without significantly changing or modifying the structure of the solar module.

Therefore, the strength of the solar module including the reinforcing frame member can be improved without significantly changing or modifying the structure of the solar module. The solar module can be easily manufactured and installed at an installation site, and an increase in the manufacture time or installation time, an increase in cost, and the like can be prevented.

In the aforementioned solar module or solar module support, the reinforcing-frame supporting member has a concave portion straddling the bottom surface of the reinforcing frame member from below at a portion where the reinforcing-frame supporting member intersects the reinforcing frame member. A bottom surface of the concave portion abuts the reinforcing frame member to support the reinforcing frame member. In this case, the concave portion of the reinforcing-frame supporting member preferably has a width greater than that of the portion of the reinforcing frame member where the reinforcing frame member intersects the reinforcing-frame supporting member.

In this case, when the reinforcing-frame supporting member is installed to span between the sub-frame members while intersecting the reinforcing frame member, the reinforcing-frame supporting member can be caused to intersect the reinforcing frame member at an angle smaller than a right angle.

Therefore, the reinforcing-frame supporting member can be easily caused to intersect the reinforcing frame member, whereby the solar module can be easily manufactured and installed at a site. Therefore, an increase in the manufacture time or installation time, an increase in cost, and the like can be prevented.

In the aforementioned solar module or solar module support, the reinforcing-frame supporting member is preferably fixed to the sub-frame members by lower surfaces of opposite end portions of the reinforcing-frame supporting member abutting upper surfaces of the sub-bottom pieces of the respective corresponding sub-frame members.

In this case, the sub-frame members are fixed to the reinforcing-frame supporting member by the sub-bottom pieces of the sub-frame members being pressed against the reinforcing-frame supporting member from above. Therefore, the distance between the sub-frame members can be maintained constant, whereby the solar cell panel can be prevented from being easily removed.

Also, in this case, the sub-frame members are fixed to the reinforcing-frame supporting member by the sub-bottom pieces of the sub-frame members being pressed against the reinforcing-frame supporting member from above. By thus fixing the reinforcing-frame supporting member to the sub-frame members while the reinforcing-frame supporting member abuts the upper surfaces of the sub-bottom pieces, the reinforcing-frame supporting member supporting the reinforcing frame member fixed to the main frame members from the back surface can be prevented from being easily removed downward.

In the aforementioned solar module or solar module support, the reinforcing-frame supporting member preferably has an upper surface facing the back surface of the solar cell panel with a gap being provided between the upper surface of the reinforcing-frame supporting member and the back surface of the solar cell panel.

By thus providing the gap between the upper surface of the reinforcing-frame supporting member and the back surface of the solar cell panel, the reinforcing-frame supporting member can be installed to span between the sub-frame members while intersecting the reinforcing frame member, easily and without damaging the back surface of the solar cell panel.

Specifically, when the reinforcing-frame supporting member is installed to span between the sub-frame members, as described above the reinforcing-frame supporting member intersecting the reinforcing frame member at an angle smaller than a right angle is rotated so that the intersection angle becomes a right angle, whereby the reinforcing-frame supporting member is installed to span between the sub-frame members. The rotation can be performed without the reinforcing-frame supporting member contacting the back surface of the solar cell panel, because there is the gap between the upper surface of the reinforcing-frame supporting member and the back surface of the solar cell panel. Therefore, the reinforcing-frame supporting member can be installed to span between the sub-frame members while intersecting the reinforcing frame member, easily and without damaging the back surface of the solar cell panel.

In the aforementioned solar module or solar module support, the reinforcing-frame supporting member preferably has a stiffness greater than that of the reinforcing frame member.

The weight of the solar module is preferably reduced to the extent possible in terms of, for example, transportation cost during transportation or the reduction of the support load at an installation site during installation. Therefore, in the solar module, typically, the main frame member, the sub-frame member, the reinforcing frame member, and the like are made of a light weight material, such as aluminum or the like.

There may be a disadvantage with a solar module including main frame members, sub-frame members, and a reinforcing frame member that are made of a light weight material, such as aluminum or the like, when used in snowy areas. Specifically, for example, when the solar module is placed on a sloped roof with the sub-frame member being closer to the eaves, sliding snow may press the sub-frame member to open a portion of the sub-frame member that clamps the solar cell panel, so that the solar cell panel may be removed from the sub-frame member.

In such a case, the use of the solar module including the reinforcing-frame supporting member having a higher stiffness than that of the reinforcing frame member has the following advantage.

Specifically, the aforementioned reinforcing-frame supporting member of the solar module can sufficiently support the reinforcing frame member supporting the load of the solar cell panel at a portion where the reinforcing-frame supporting member and the reinforcing frame member intersect. In addition, the reinforcing-frame supporting member is provided to span between a pair of the sub-frame members, and therefore, the distance between the sub-frame members can be maintained constant, whereby the portion of the sub-frame member clamping the solar cell panel can be prevented from being opened.

When the stiffness of the reinforcing-frame supporting member is greater than that of the reinforcing frame member, the following advantage is also obtained. Specifically, even when the reinforcing frame member may be bent to some extent by, for example, snow or the like, the reinforcing-frame supporting member itself can be prevented from being bent because the reinforcing-frame supporting member supports the reinforcing frame member. Therefore, even if the reinforcing frame member is bent, the solar cell panel can be prevented from being damaged. Also, if an unexpectedly large load is applied to the solar cell panel, so that the back surface of the solar cell panel is bent, the bent surface can be supported by a portion of the reinforcing-frame supporting member.

In the aforementioned solar module or solar module support, the reinforcing frame member is preferably put into the main frame members from below.

In this case, the upper surface of the reinforcing frame member is easily fixed to the back surface of the solar cell panel using an adhesive or the like. Therefore, while the solar cell panel is prevented from being removed upward, the solar cell panel can be prevented from being removed downward by the reinforcing-frame supporting member supporting the reinforcing frame member from below. Thus, the solar cell panel can be held in a balanced manner.

The reinforcing frame member is put into the main frame members from below in the following manner, for example. Initially, the reinforcing frame member is constructed using a plate-shaped upper piece and lower piece, and a wall piece linking the upper piece and the lower piece.

Thereafter, a region including an edge of each of opposite end portions of the upper piece of the reinforcing frame member close to the corresponding main frame member and extending from the edge along the wall piece is cut away. The cut region has a width such that when the reinforcing frame member is put into the main frame members from below, the reinforcing frame member and the main bottom pieces of the main frame member do not overlap. For example, when the end portion of the reinforcing frame member contacts the inner surface of the main frame member, then if the upper piece extending over a length that is greater than or equal to the protruding width of the main bottom piece of the main frame member is cut away, the upper piece of the reinforcing frame member can be prevented from overlapping the main bottom piece of the main frame member.

Next, a slit extending outward from a tip end of the main bottom piece is formed in each of the main bottom pieces of the main frame members. Thereafter, the wall piece of the reinforcing frame member is put into the slit of the main bottom piece of the main frame member from below. The reinforcing frame member is fixed to the main frame member while the upper surface of the end portion of the lower piece close to the main frame member abuts the lower surface of the main bottom piece of the main frame member. Moreover, the upper piece of the reinforcing frame member is bonded with the back surface of the solar cell panel.

In conventional solar modules, typically the reinforcing frame member is attached between the upper surfaces of the main bottom pieces of the main frame members and the back surface of the solar cell panel. In the attachment process of this reinforcing frame member, the opposite ends of the reinforcing frame member need to be inserted between the upper surfaces of the main bottom pieces of both the main frame members and the back surface of the solar cell panel. In this case, the reinforcing frame member needs to be moved while the upper surface of the reinforcing frame member contacts the back surface of the solar cell panel. Therefore, disadvantageously, the back surface of the solar cell panel may be damaged.

In the solar module of the present invention including the aforementioned reinforcing frame member, however, the wall piece of the reinforcing frame member is put into the slits of the main bottom pieces of the main frame members from below, so that the reinforcing frame member is fixed to the main frame members while the upper surfaces of the opposite end portions of the lower piece close to the main frame members abut the lower surfaces of the main bottom pieces of the respective corresponding main frame members. Therefore, the reinforcing frame member can be easily positioned relative to, and fixed to, the main bottom pieces of the main frame members. In addition, during this process, it is not necessary to move the reinforcing frame member while the upper surface of the reinforcing frame member contacts the back surface of the solar cell panel, and therefore, the back surface of the solar cell panel can be prevented from being damaged.

A photovoltaic power generation system including at least the aforementioned solar module that includes a rectangular solar cell panel including a pair of main edges and a pair of sub-edges adjacent to the main edges, a pair of main frame members, a pair of sub-frame members, and a reinforcing frame member, and the aforementioned solar module support.

### Effects of the Invention

According to the present invention, the reinforcing-frame supporting member is provided so that the main axis of the reinforcing-frame supporting member and the main axis of the reinforcing frame member intersect at different heights. Therefore, the reinforcing-frame supporting member can be provided to span between the sub-frame members while intersecting the reinforcing frame member, without changing or modifying the reinforcing frame member and with the strength being maintained.

Therefore, in the aforementioned solar module including the reinforcing-frame supporting member, the reinforcing-frame supporting member can be attached to the solar module without significantly changing or modifying the structure of the solar module.

Therefore, the strength of the solar module including the reinforcing frame member can be improved without significantly changing or modifying the structure of the solar module. The solar module can be easily manufactured and installed at an installation site, and an increase in the manufacture time or installation time, an increase in cost, and the like can be prevented.

### Brief Description of Drawings

[FIG. 1] FIG. 1 is a plan view of a solar module according to an embodiment.
[FIG. 2] FIG. 2 is a front view of the solar module of the embodiment.
[FIG. 3] FIG. 3 is a side view of the solar module of the embodiment.
[FIG. 4] FIG. 4 is a bottom view of the solar module of the embodiment.
[FIG. 5] FIG. 5 is a partial perspective view of frame members of the solar module of the embodiment as viewed from the inside.
[FIG. 6] FIG. 6 is a perspective view showing an outer appearance of a reinforcing frame member of the solar module of the embodiment.
[FIG. 7] FIG. 7 is a perspective view showing a structure of a portion of a main frame member of the solar module of the embodiment with which the reinforcing frame member is to be joined.
[FIG. 8] FIG. 8 is a perspective view showing an intermediate state of the reinforcing frame member of the solar module of the embodiment that is being joined with the main frame member.
[FIG. 9] FIG. 9 is a perspective view showing a state of the reinforcing frame member of the solar module of the embodiment that is joined with the main frame member.
[FIG. 10] FIG. 10 is a perspective view showing an outer appearance of a reinforcing-frame supporting member of the solar module of the embodiment.
[FIG. 11] FIG. 11 is a perspective view showing a state of the reinforcing-frame supporting member of the solar module of the embodiment straddling the reinforcing frame member.
[FIG. 12] FIG. 12 is a perspective view showing a structure of a portion of a sub-frame member to which the reinforcing-frame supporting member of the solar module of the embodiment is fixed.
[FIG. 13] FIG. 13 is a bottom view of the solar module for showing a method of installing the reinforcing-frame supporting member of the solar module of the embodiment to span between the sub-frame members.
[FIG. 14] FIG. 14 is a (first) perspective view showing an intermediate state of installation of the reinforcing-frame supporting member of the solar module of the embodiment spanning between the sub-frame members.
[FIG. 15] FIG. 15 is a (second) perspective view showing an intermediate state of installation of the reinforcing-frame supporting member of the solar module of the embodiment spanning between the sub-frame members.
[FIG. 16] FIG. 16 is a perspective view showing an intermediate state of another example reinforcing frame member of the solar module of the embodiment that is being joined with the main frame member.

### Description of the Invention

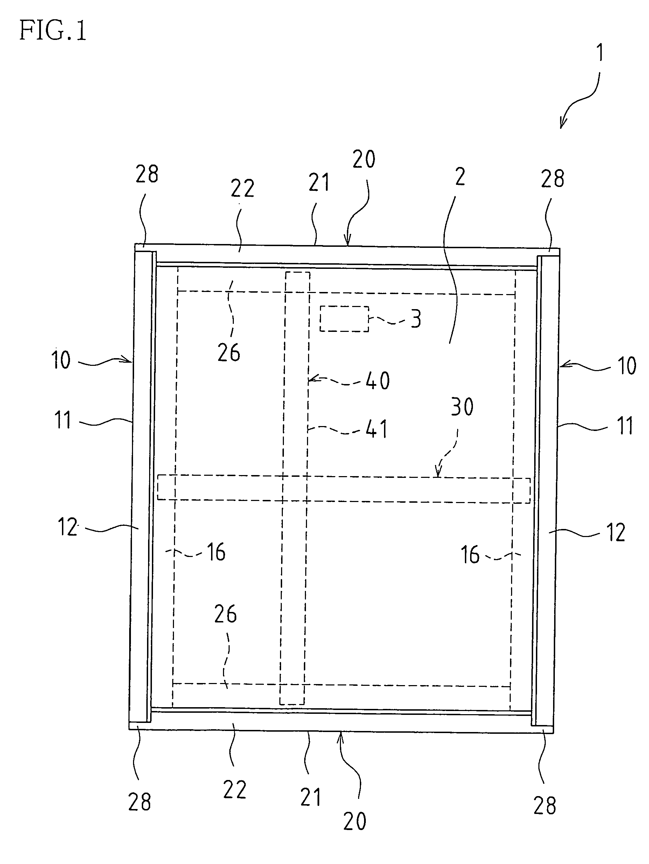

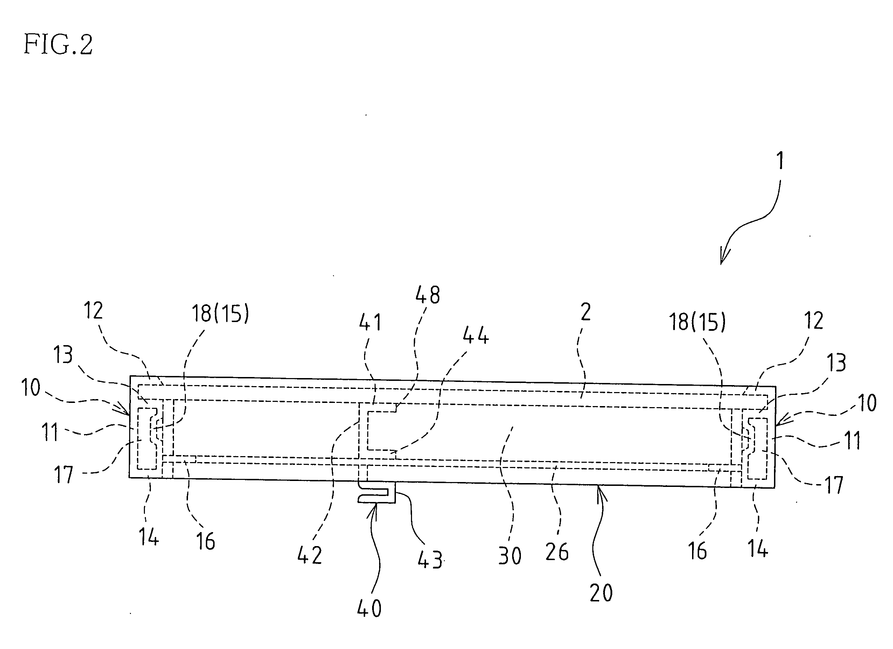

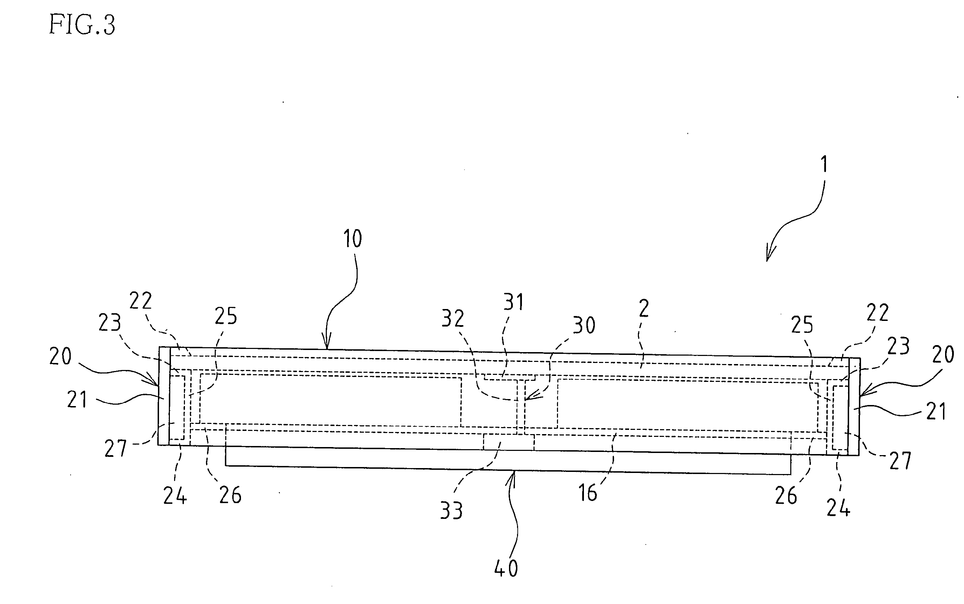

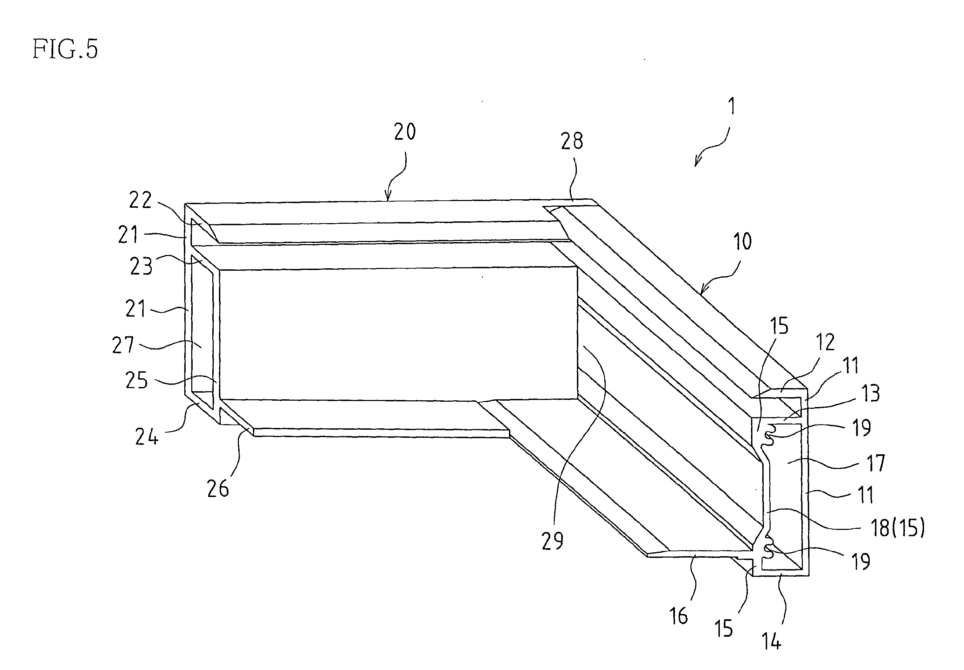

Next, a solar module according to an embodiment of the present invention will be described with reference to the accompanying drawings. FIGS. 1, 2, 3, and 4 are plan, front, side, and bottom views of the solar module 1 of this embodiment, respectively. FIG. 5 is a partial perspective view of frame members of the solar module 1 as viewed from the inside. Note that a solar cell panel 2 is not shown in FIG. 5.

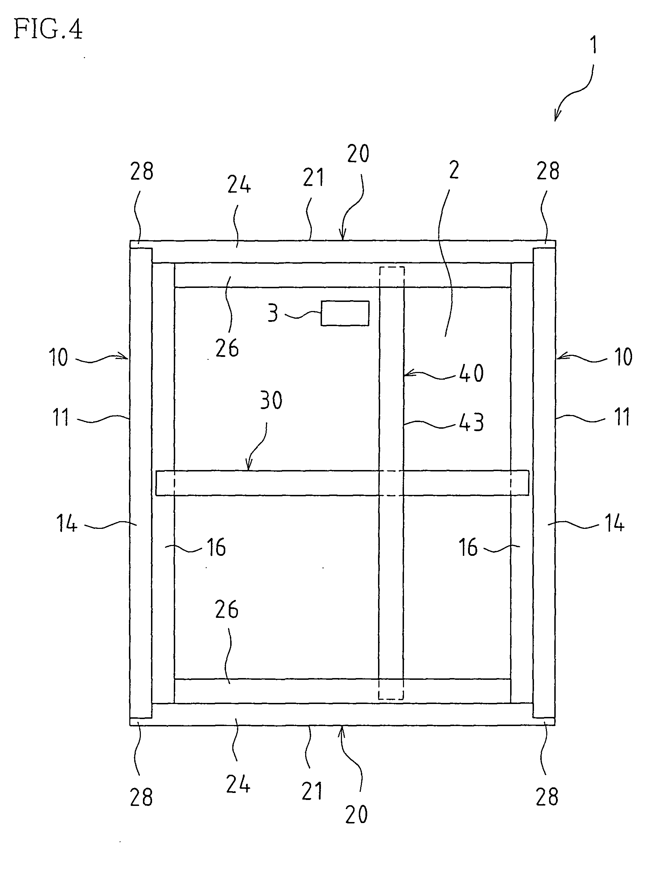

As shown in FIGS. 1-5, the solar module 1 of this embodiment mainly includes a rectangular solar cell panel 2 and frame members. The frame members include a pair of main frame members 10 and 10, and a pair of sub-frame members 20 and 20. The solar cell panel 2 has outer dimensions of about 1150 mm x about 1000 mm. As shown in FIGS. 1 and 4, an output terminal box 3 via which an output of the solar cell panel 2 is extracted is provided on the back surface of the solar cell panel 2.

The solar cell panel 2 is held by the pair of main frame members 10 and 10 holding main edges of the solar cell panel 2 and the pair of sub-frame members 20 and 20 holding sub-edges adjacent to the main edges of the solar cell panel 2.

The solar module 1 preferably has as light a weight as possible in order to, for example, reduce a transportation cost when the module is transported or a support load at an installation site when the module is installed. Therefore, the solar module 1 is preferably made of a light weight material, such as aluminum or the like. The main frame members 10 and 10 and the sub-frame members 20 and 20, and in addition, a reinforcing frame member and the like described below, are made of aluminum.

As shown in FIG. 5 and the like, the main frame member 10 includes a main outer wall 11, an upper main holding piece 12, a lower main holding piece 13, a main bottom end piece 14, a main inner wall 15, and a main bottom piece 16. Of them, the main outer wall 11 is formed along the main edge of the solar cell panel 2. The upper main holding piece 12 and the lower main holding piece 13 are vertically provided on an inner surface of an upper portion of the main outer wall 11, protruding inward and extending over substantially the same length. The solar cell panel 2 is put into a gap between the upper main holding piece 12 and the lower main holding piece 13 so that the solar cell panel 2 is held by the upper main holding piece 12 and the lower main holding piece 13. The main outer wall 11, the upper main holding piece 12, and the lower main holding piece 13, which hold the solar cell panel 2 put in the gap, constitute a portion corresponding to the aforementioned main holder.

The main bottom end piece 14 is formed on an inner surface of a lower end of the main outer wall 11, protruding inward along the main outer wall 11. The main inner wall 15 is formed to link a tip end of the main bottom end piece 14 and a tip end of the lower main holding piece 13. The main bottom piece 16 is formed on an inner surface of a lower portion of the main inner wall 15, protruding inward along the main inner wall 15. As shown in FIG. 5 and the like, the main frame member 10 has a main inner space 17 surrounded by the main outer wall 11, the lower main holding piece 13, the main inner wall 15, and the main bottom end piece 14. The main outer wall 11, the lower main holding piece 13, the main inner wall 15, and the main bottom end piece 14 constitute a portion corresponding to the aforementioned main wall.

As shown in FIG. 5 and the like, the sub-frame member 20 includes a sub-outer wall 21, an upper sub-holding piece 22, a lower sub-holding piece 23, the sub-bottom end piece 24, a sub-inner wall 25, and a sub-bottom piece 26. Of them, the sub-outer wall 21 is formed along the sub-edge of the solar cell panel 2. The upper sub-holding piece 22 and the lower sub-holding piece 23 are vertically provided on an inner surface of an upper portion of the sub-outer wall 21, protruding inward and extending over substantially the same length. The solar cell panel 2 is put into a gap between the upper sub-holding piece 22 and the lower sub-holding piece 23 so that the solar cell panel 2 is held by the upper sub-holding piece 22 and the lower sub-holding piece 23. The sub-outer wall 21, the upper sub-holding piece 22, and the lower sub-holding piece 23, which hold the solar cell panel 2 put in the gap, constitute a portion corresponding to the aforementioned sub-holder.

The sub-bottom end piece 24 is formed on an inner surface of a lower end of the sub-outer wall 21, protruding inward along the sub-outer wall 21. The sub-inner wall 25 is formed to link a tip end of the sub-bottom end piece 24 and a tip end of the lower sub-holding piece 23. The sub-bottom piece 26 is formed on an inner surface of a lower end of the sub-inner wall 25, protruding inward along the sub-inner wall 25. As shown in FIG. 5 and the like, the sub-frame member 20 has a sub-inner space 27 surrounded by the sub-outer wall 21, the lower sub-holding piece 23, the sub-inner wall 25, and the sub-bottom end piece 24. The sub-outer wall 21, the lower sub-holding piece 23, the sub-inner wall 25, and the sub-bottom end piece 24 constitute a portion corresponding to the aforementioned sub-wall.

As shown in FIG. 5, in the sub-frame member 20, the upper sub-holding piece 22, the lower sub-holding piece 23, the sub-bottom end piece 24, the sub-inner wall 25, and the sub-bottom piece 26 at an end portion of the sub-outer wall 21 of the sub-frame member 20 that extend in the same length from an edge of the sub-outer wall 21 as the protruding length of the upper main holding piece 12, are cut away, the lower main holding piece 13, and the main bottom end piece 14 of the main frame member 10. As a result, a flat sub-outer wall end portion 28 is formed at the end portion of the sub-outer wall 21.

An end surface at an end portion of the main frame member 10 is caused to abut an inner surface of the sub-outer wall end portion 28, and the sub-frame member 20 and the main frame member 10 of the solar module 1 are joined by inserting screws into screw receiving portions 19.

As shown in FIG. 5, an end portion of the sub-bottom piece 26 of the sub-frame member 20 is cut away so that the main bottom piece 16 of the main frame member 10 and the sub-bottom piece 26 of the sub-frame member 20 do not strike against each other.

In the main frame member 10, as shown in FIG. 5 and the like, a main inner wall hollow portion 18 of the main inner wall 15 of the main frame member 10 that is closer to the center of the main inner space 17 than the other portion of the main inner wall 15 is formed at a higher position than that of the protruding main bottom piece 16. The main inner wall hollow portion 18 extends, along the longitudinal direction of the main inner wall 15, across the entirety of the main inner wall 15 including a portion thereof on which an opening portion of the sub-inner space 27 of the sub-frame member 20 abuts. A space 29 is formed between the main inner wall hollow portion 18 and the opening portion of the sub-inner space 27 as shown in FIG. 5. The sub-inner space 27 is in communication with the outside via the space 29.

In the solar module 1 of this embodiment, as shown in FIGS. 1 and 4, in order to reinforce the structure of the solar module 1, a reinforcing frame member 30 is provided to span between the main frame members 10 at the back surface of the solar cell panel 2. A reinforcing-frame supporting member 40 that is provided to span between the sub-frame members 20 at the back surface of the solar cell panel 2 is added to the solar module 1 including the reinforcing frame member 30.

Of them, the reinforcing frame member 30 has a role in supporting the load of the solar cell panel 2. The reinforcing-frame supporting member 40 has a role in supporting the reinforcing frame member 30. Next, the reinforcing frame member 30 and the reinforcing-frame supporting member 40 will be described.

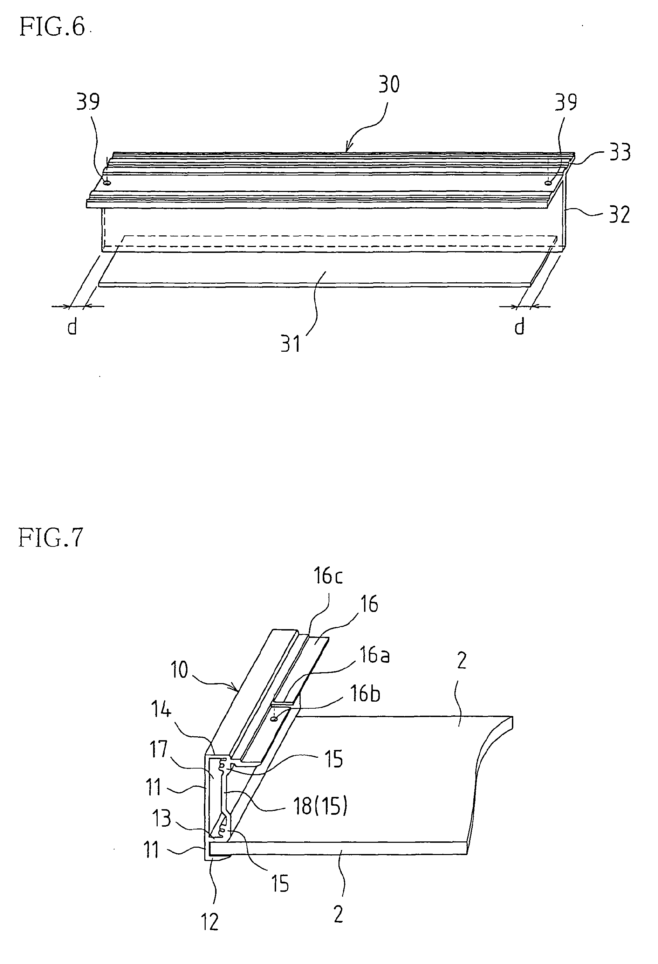

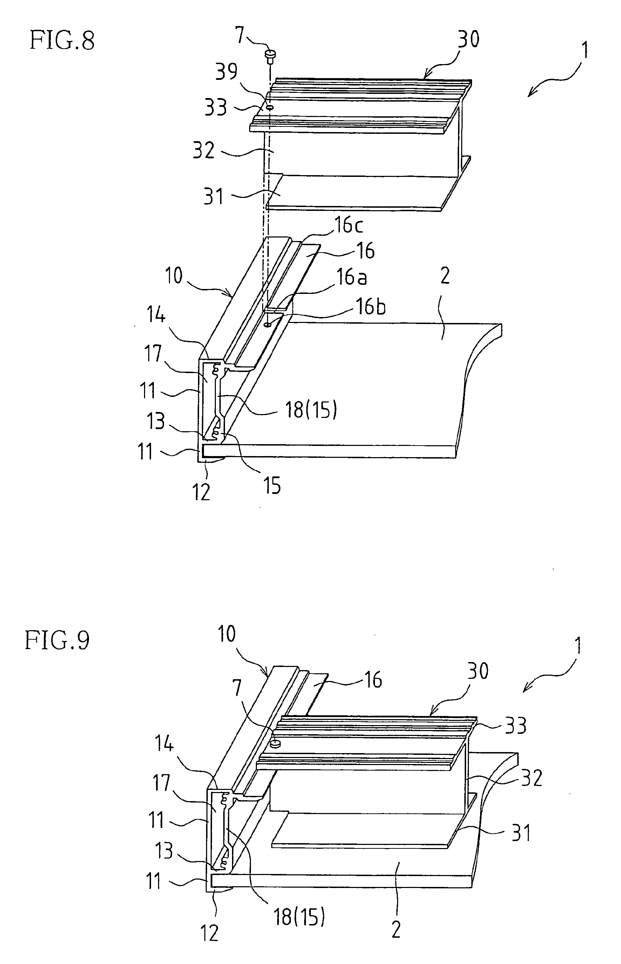

Firstly, the reinforcing frame member 30 will be described. FIG. 6 is a perspective view showing an outer appearance of the reinforcing frame member 30. FIG. 7 is a perspective view showing a structure of a portion of the main frame member 10 with which the reinforcing frame member 30 is to be joined. FIG. 8 is a perspective view showing an intermediate state of the reinforcing frame member 30 that is being joined with the main frame member 10. FIG. 9 is a perspective view showing a state of the reinforcing frame member 30 that is joined with the main frame member 10. Note that, in all of FIGS. 6-9, the arrangement is upside down. In other words, FIGS. 6-9 show the reinforcing frame member 30 and the main frame member 10 as viewed from the lower surface thereof.

As shown in FIG. 6, the reinforcing frame member 30 includes a plate-shaped upper piece (upper flange) 31 and lower piece (lower flange) 33, and a wall piece (web) 32 that links the upper piece 31 and the lower piece 33. The reinforcing frame member 30 is in the shape of a type of H-beam. The reinforcing frame member 30 is made of aluminum.

In the reinforcing frame member 30, the upper piece 31 and the lower piece 33 each protrude to the left and right of the wall piece 32 at right angles to the wall piece 32. As shown in FIG. 6, the upper piece 31 and the lower piece 33 have the same protruding length, but the left and right protruding lengths of each piece are not the same. Alternatively, the left and right protruding lengths may be the same.

In order to improve the strength of the reinforcing frame member 30, grooves and ridges are formed in the bottom surface of the reinforcing frame member 30, leaving a portion thereof flat. In this flat portion, screw holes 39 and 39 are provided that are used to fix the main frame members 10 when the reinforcing frame member 30 is installed to span between the main frame members 10.

In the reinforcing frame member 30, as shown in FIG. 6, a region including an edge of each of opposite end portions of the upper piece 31 of the reinforcing frame member 30 and extending over a distance d from the edge along the wall piece 32 that is greater than or equal to the protruding width of the main bottom piece 16 of the main frame member 10, is cut away.

In order to install the reinforcing frame member 30 to span between the main frame members 10, as shown in FIG. 7, a slit 16a extending outward from a tip end of the main bottom piece 16 is formed in the main bottom piece 16 of the main frame member 10. A screw hole 16b for fixing the reinforcing frame member 30 to the main frame member 10 is provided in the main bottom piece 16 of the main frame member 10. A step 16c is formed in the lower surface of the main bottom piece 16 of the main frame member 10.

The reinforcing frame member 30 is installed to span between the main frame members 10 in the following manner. Specifically, as shown in FIGS. 8 and 9, a portion including an edge of each of the opposite end portions of the upper piece 31 of the reinforcing frame member 30 and extending over a distance d from the edge along the wall piece 32 that is greater than or equal to the protruding length of the main bottom piece 16 of the main frame member 10, is cut away, so that upper ends of the opposite end portions of the wall piece 32 of the reinforcing frame member 30 are not covered with the upper piece 31.

The upper ends of the opposite end portions of the wall piece 32 of the reinforcing frame member 30 are put into the slits 16a of the main bottom pieces 16 of the main frame members 10 from below so that the upper surfaces of the end portions of the lower piece 33 close to the main frame members 10 abut the lower surfaces of the main bottom pieces 16 of the main frame members 10. In this case, the reinforcing frame member 30 can be easily positioned relative to the main bottom pieces 16 of the main frame members 10 by causing the end surfaces of the opposite end portions of the wall piece 32 of the reinforcing frame member 30 to abut the steps 16c formed in the lower surfaces of the main bottom pieces 16 of the main frame members 10.

While the wall piece 32 of the reinforcing frame member 30 is put in the slits 16a of the main bottom pieces 16 of the main frame members 10 as described above, the reinforcing frame member 30 is fixed to the main frame member 10 by inserting screws 7 into the screw holes 39 of the reinforcing frame member 30 and the screw holes 16b of the main frame members 10. Also, by previously applying an adhesive to the upper surface of the upper piece 31 of the reinforcing frame member 30, the reinforcing frame member 30 is bonded with the back surface of the solar cell panel while the reinforcing frame member 30 is fixed to the main frame members 10.

In this case, the screw holes 39 and 39 for fixing the reinforcing frame member 30 to the main frame members 10 are formed in the hollow and flat portion of the lower piece 33 of the reinforcing frame member 30. Therefore, when the reinforcing frame member 30 is fixed to the main frame members 10, the heads of the screws 7 can be prevented from protruding downward beyond the ridge portion of the lower piece 33 of the reinforcing frame member 30. Therefore, it is possible to eliminate a protrusion that would be likely to be responsible for causing the solar module 1 to get stuck when the solar module 1 is transported or installed, for example.

In the solar module 1 above, the use of the reinforcing frame member 30 has the following advantage. Specifically, in conventional solar modules, typically, for example, the reinforcing frame member is attached between the upper surfaces of the main bottom pieces 16 of the main frame members 10 and the back surface of the solar cell panel 2 in the case of the solar module 1.

In the attachment process of this reinforcing frame member, the opposite ends of the reinforcing frame member need to be inserted between the upper surfaces of the main bottom pieces 16 of both the main frame members 10 and the back surface of the solar cell panel 2. In this case, the reinforcing frame member needs to be moved while the upper surface of the reinforcing frame member contacts the back surface of the solar cell panel 2. Therefore, disadvantageously, the back surface of the solar cell panel 2 may be damaged.

In the case of the solar module 1 including the reinforcing frame member 30, however, the wall piece 32 of the reinforcing frame member 30 is put into the slits 16a of the main bottom pieces 16 of the main frame members 10 from below, so that the reinforcing frame member 30 is fixed to the main frame members 10 while the upper surfaces of the opposite end portions of the lower piece 33 close to the main frame members 10 abut the lower surfaces of the main bottom pieces 16 of the main frame members 10. Therefore, the reinforcing frame member 30 can be easily positioned relative to, and fixed to, the main bottom pieces 16 of the main frame members 10. In addition, during this process, it is not necessary to move the reinforcing frame member 30 while the upper surface of the reinforcing frame member 30 contacts the back surface of the solar cell panel 2, and therefore, the back surface of the solar cell panel 2 can be prevented from being damaged.

In the solar module 1 above, the reinforcing frame member 30 is fixed to the main bottom pieces 16 of the main frame members 10 by using one screw 7 for each of the opposite end portions of the reinforcing frame member 30. Alternatively, two or more screws 7 may be used for each end portion. Alternatively, the reinforcing frame member 30 may be fixed to the main bottom pieces 16 of the main frame members 10 by welding or using an adhesive.

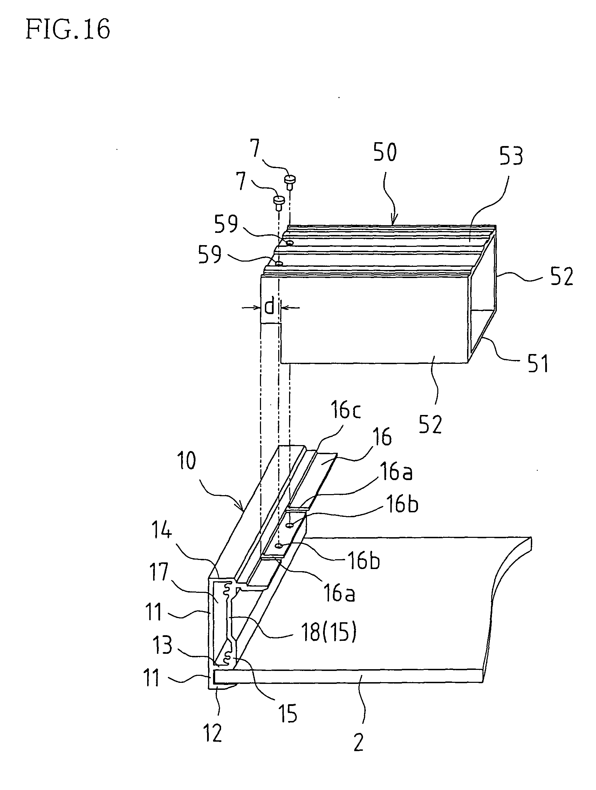

In the solar module 1 above, the reinforcing frame member 30 is in the shape of a type of H-beam. Alternatively, the reinforcing frame member 30 may be in the shape of an I-beam. Alternatively, as shown in FIG. 16, a reinforcing frame member 50 may be used that includes a pipe-shaped upper piece 51, wall pieces 52 and 52, and a lower piece 53 and is in the shape of a pipe having a quadrangular cross-section.

When the reinforcing frame member 50 in the shape of a pipe having a quadrangular cross-section shown in FIG. 16 is used, regions including opposite end portions of the upper pieces 51 and edges in the vicinity of upper end portions of opposite end portions the wall pieces 52 and 52 and extending over a distance d from the edges along the wall pieces 52 and 52 that is greater than or equal to the protruding width of the main bottom piece 16 of the main frame member 10, are cut away, for example.

Moreover, in order to improve the strength of the reinforcing frame member 50 as in the case of the reinforcing frame member 30, grooves and ridges are formed in the bottom surface of the reinforcing frame member 50. In addition, a total of four screw holes 59 are provided in the bottom surface of the reinforcing frame member 50 (two screw holes 59 for each end portion). The screw holes 59 are used to fix the reinforcing frame member 50 to the main frame members 10 when the reinforcing frame member 50 is provided to span between the main frame members 10.

As shown in FIG. 16, two slits 16a and 16a into which the upper end portions of the opposite end portions of the wall pieces 52 and 52 can be put are formed in the main bottom piece 16 of the main frame member 10, extending outward from the tip end of the main bottom piece 16. Also, two screw holes 16b and 16b for fixing the reinforcing frame member 50 to the main frame member 10 are provided in the main bottom piece 16 of the main frame member 10. Also, a step 16c is formed in the lower surface of the main bottom piece 16 of the main frame member 10.

As shown in FIG. 16, by fixing both the opposite end portions of the reinforcing frame member 50 thus formed to the main bottom pieces 16 of the main frame members 10 using screws 7 in a manner similar to that for the reinforcing frame member 30, the reinforcing frame member 50 can be provided to span between the main frame members 10.

Next, the reinforcing-frame supporting member 40 will be described. As described above, the reinforcing-frame supporting member 40 is attached to the solar module 1 including the reinforcing frame member 30. Specifically, the reinforcing-frame supporting member 40 is provided to span between the sub-frame members 20, straddling the reinforcing frame member 30 from below, and has a role in supporting the reinforcing frame member 30, in the solar module 1 including the reinforcing frame member 30.

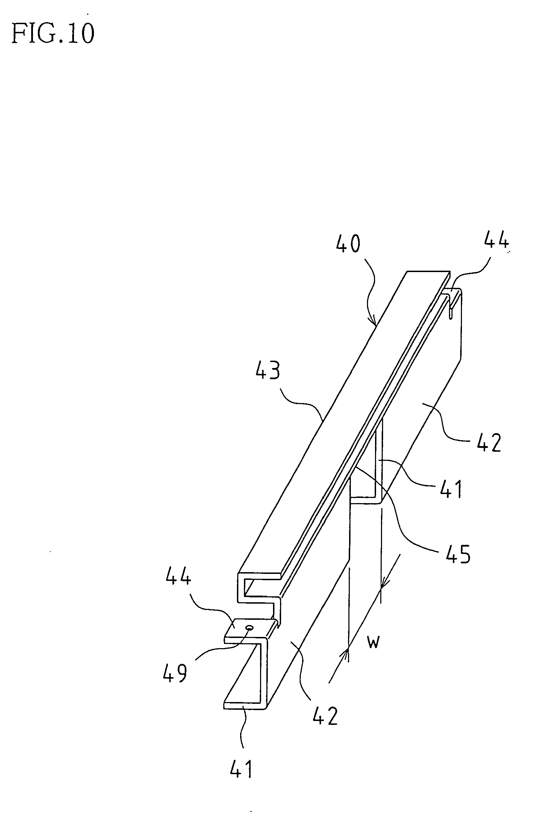

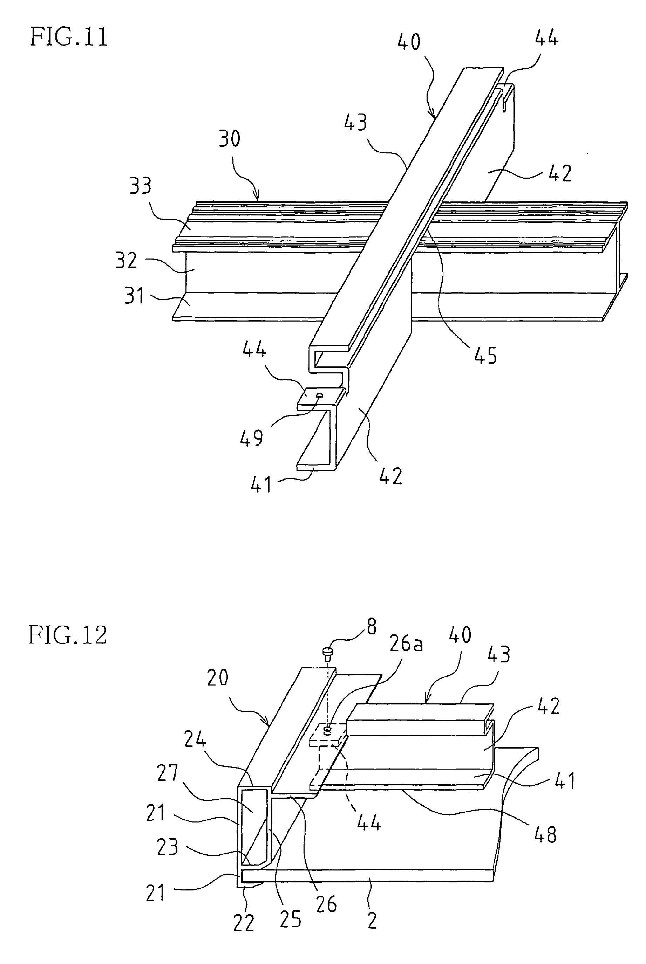

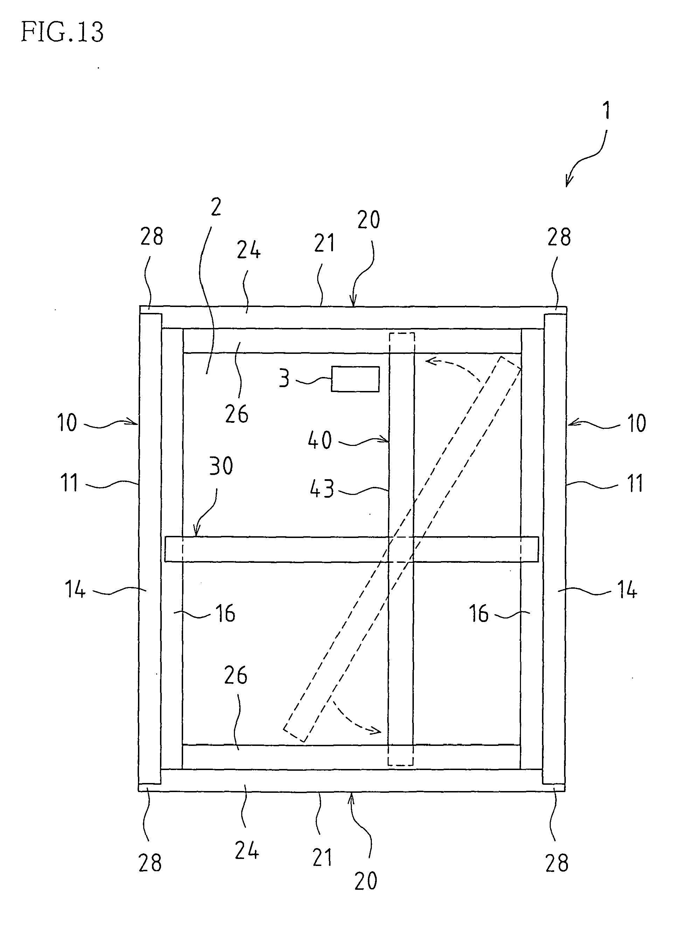

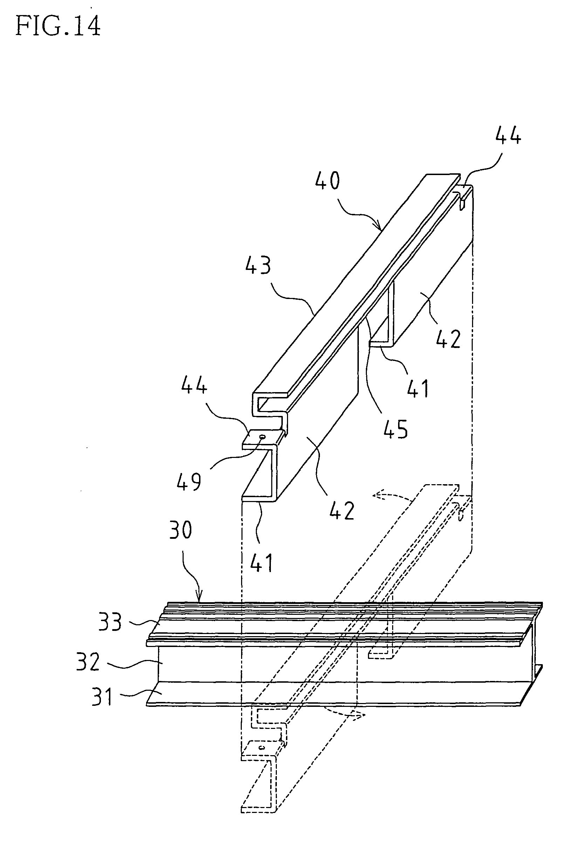

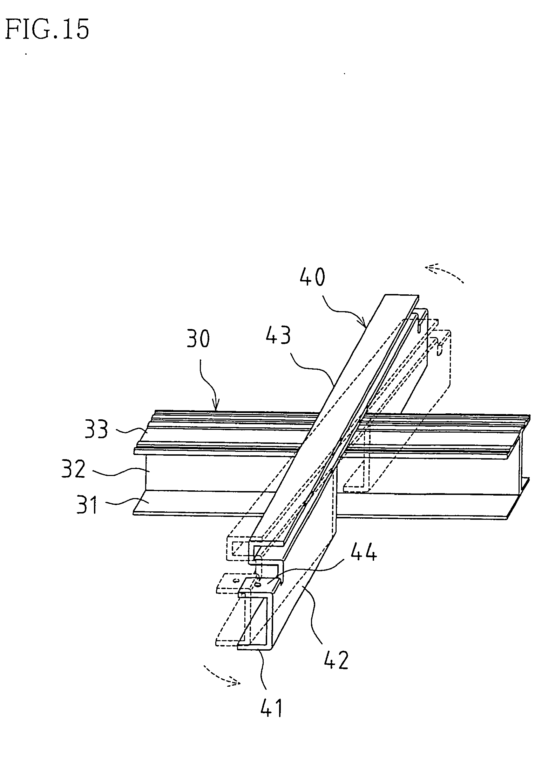

FIG. 10 is a perspective view showing an outer appearance of the reinforcing-frame supporting member 40. FIG. 11 is a perspective view showing a state of the reinforcing-frame supporting member 40 straddling the reinforcing frame member 30. FIG. 12 is a perspective view showing a structure of a portion of the sub-frame member 20 to which the reinforcing-frame supporting member 40 is fixed. FIG. 13 is a bottom view of the solar module 1 for showing a method of installing the reinforcing-frame supporting member 40 to span between the sub-frame members 20. FIGS. 14 and 15 are perspective views intermediate states of installation of the reinforcing-frame supporting member 40 spanning between the sub-frame members 20. Note that, in all of FIGS. 10-15, the arrangement is upside down. In other words, FIGS. 10-15 show the reinforcing-frame supporting member 40 and the sub-frame member 20 as viewed from the lower surface thereof.

As shown in FIG. 10, the reinforcing-frame supporting member 40 includes a leg 43 in the shape of a channel beam, a wall 42 extending upward from an end portion along a longitudinal direction of an upper flat plate of the leg 43, and a top plate 41 protruding from an upper end of the wall 42 at right angles and laterally, i.e., in the same direction as a bending direction of the leg 43. The reinforcing-frame supporting member 40 is made of aluminum as in the case of the reinforcing frame member 30.

The reinforcing-frame supporting member 40 may, however, be made of a steel plate. When the reinforcing frame member 30 is made of aluminum and the reinforcing-frame supporting member 40 is made of a steel plate, the stiffness of the reinforcing-frame supporting member 40 can be caused to be higher than that of the reinforcing frame member.

As shown in FIG. 10, a crotch portion 45 having a concave shape is formed at a center of the wall 42 of the reinforcing-frame supporting member 40. The bottom portion of the concave shape is formed by the upper surface of the leg 43. The crotch portion 45 is a portion where the reinforcing-frame supporting member 40 straddles the reinforcing frame member 30 as described above. When the reinforcing-frame supporting member 40 straddles the reinforcing frame member 30 from below, the bottom portion of the crotch portion 45 contacts the lower surface of the lower piece 33 of the reinforcing frame member 30, whereby the reinforcing-frame supporting member 40 supports the reinforcing frame member 30.

The crotch portion 45 has a width w that is greater than that of the reinforcing frame member 30 so that the reinforcing-frame supporting member 40 can be easily installed to span between the sub-frame members 20 of the solar module 1. For a similar reason, the wall 42 of the reinforcing-frame supporting member 40 has a height that is slightly smaller than that of the reinforcing frame member 30 that the reinforcing-frame supporting member 40 straddles. The difference in height between the wall 42 of the reinforcing-frame supporting member 40 and the reinforcing frame member 30 is, for example, about 3 mm.

The crotch portion 45 is also formed so that a length between opposite outer ends of the wall 42 including the crotch portion 45 is interposed is greater than that of the leg 43. Therefore, as shown in FIG. 10, the leg 43 is not formed at opposite end portions of the wall 42, and a fixing piece 44 for fixing the reinforcing-frame supporting member 40 to the sub-frame member 20 is formed at each outer end portion instead of the leg 43.

The lower ends of the opposite end portions of the wall 42 at which the fixing pieces 44 are formed are located higher, or closer to the solar cell panel, than the position from which the wall 42 extends upward from the leg 43. In other words, the heights from the upper ends to the lower ends of the opposite end portions of the wall 42 is smaller than the height from the upper end of the lower end of the wall 42 other than the opposite end portions.

The fixing pieces 44 are formed to protrude from the lower ends of the opposite end portions of the wall 42 at right angles and laterally, i.e., in the same direction as the bending direction of the leg 43. A screw hole 49 that is used to fix the reinforcing-frame supporting member 40 to the sub-frame member 20 is provided in each of the fixing pieces 44.

The reinforcing-frame supporting member 40 is installed to span between the sub-frame members 20 of the solar module 1 as follows. Specifically, as described above, the width w of the crotch portion 45 of the reinforcing-frame supporting member 40 is greater than the width of the reinforcing frame member 30. Therefore, the reinforcing-frame supporting member 40 can straddle the reinforcing frame member 30 from below even if the reinforcing-frame supporting member 40 is tilted relative to the reinforcing frame member 30.

Therefore, as shown in FIGS. 13 and 14, in the solar module 1 in which the reinforcing frame member 30 is provided to span between the main frame members 10, while the output terminal box 3 is avoided, the reinforcing-frame supporting member 40 is tilted relative to the reinforcing frame member 30. The top plate 41 of the reinforcing-frame supporting member 40 is caused to face the back surface of the solar cell panel 2. The reinforcing-frame supporting member 40 is inserted into the back surface of the solar module 1 so that the crotch portion 45 of the reinforcing-frame supporting member 40 straddles a center portion of the reinforcing frame member 30 from below.

Therefore, as described above, while the top plate 41 of the reinforcing-frame supporting member 40 is caused to face the back surface of the solar cell panel 2, the reinforcing-frame supporting member 40 is inserted into the back surface of the solar module 1 with the reinforcing-frame supporting member 40 straddling the reinforcing frame member 30 from below.

The reinforcing-frame supporting member 40 thus inserted into the back surface of the solar module 1 is rotated about the crotch portion 45 of the reinforcing-frame supporting member 40 as a pivot of rotation, as indicated by arrows shown in FIGS. 13, 14, and 15. As described above, the height of the wall 42 of the reinforcing-frame supporting member 40 is slightly smaller than that of the reinforcing frame member 30 that the reinforcing-frame supporting member 40 straddles.

When the reinforcing-frame supporting member 40 is rotated about the crotch portion 45 of the reinforcing-frame supporting member 40 as a pivot of rotation, a gap 48 is formed between the top plate 41 of the reinforcing-frame supporting member 40 and the back surface of the solar cell panel 2 as shown in FIG. 12. Therefore, the reinforcing-frame supporting member 40 can be smoothly rotated, and the back surface of the solar cell panel 2 can be prevented from being damaged (e.g., scratched, etc.) by the top plate 41 of the reinforcing-frame supporting member 40, for example.

By rotating the reinforcing-frame supporting member 40 as described above, the opposite end portions of the reinforcing-frame supporting member 40 are inserted between the sub-bottom pieces 26 of the sub-frame members 20 of the solar module 1 and the back surface of the solar cell panel 2, and as shown in FIG. 11, the reinforcing-frame supporting member 40 is caused to intersect the reinforcing frame member 30 at right angles.

In this case, as shown in FIG. 12, the lower surface of the fixing piece 44 of the reinforcing-frame supporting member 40 is placed on top of the upper surface of the sub-bottom piece 26 of the sub-frame member 20. Thereafter, the reinforcing-frame supporting member 40 is fixed to the sub-frame member 20 by inserting a screw 8 into a screw hole 26a and the screw hole 49.

Although the reinforcing-frame supporting member 40 is fixed to the sub-frame member 20 using a single screw 8, two or more screws may be used. Alternatively, the reinforcing-frame supporting member 40 may be fixed to the sub-frame member 20 by welding or using an adhesive.

In the solar module 1 above, when the reinforcing-frame supporting member 40 is inserted into the back surface of the solar module 1 and installed to span between the sub-frame members 20, the reinforcing-frame supporting member 40 is positioned, avoiding the output terminal box 3. However, when the output terminal box 3 is accommodated in the thickness of the solar cell panel 2, the reinforcing-frame supporting member 40 may be placed to straddle the output terminal box 3.

Although, in the solar module 1 above, the reinforcing frame member 30 and the reinforcing-frame supporting member 40 are placed in the solar module 1 to form a cross shape, the method of placing the reinforcing frame member 30 and the reinforcing-frame supporting member 40 is not limited to this.

The reinforcing frame member 30 and the reinforcing-frame supporting member 40 may be installed using any method that provides a structure in which the reinforcing-frame supporting member 40 straddles the reinforcing frame member 30 so that the bottom portion of the crotch portion 45 of the reinforcing-frame supporting member 40 contacts the lower surface of the lower piece 33 of the reinforcing frame member 30, whereby the reinforcing-frame supporting member 40 can support the reinforcing frame member 30. Therefore, for example, the reinforcing frame member 30 and the reinforcing-frame supporting member 40 may be placed to form an X shape or a sharp-symbol shape.

According to the solar module 1 above, the reinforcing-frame supporting member 40 has the crotch portion 45 having a concave shape that straddles the bottom surface of the reinforcing frame member from below, at a portion where the reinforcing-frame supporting member 40 intersects the reinforcing frame member 30. Therefore, the reinforcing-frame supporting member 40 can be provided to span between the sub-frame members 20 while the reinforcing-frame supporting member 40 intersects the reinforcing frame member 30, without changing or modifying the reinforcing frame member 30.

Therefore, in the solar module 1 including the reinforcing frame member 30, the reinforcing-frame supporting member 40 can be attached to the solar module 1 without significantly changing or modifying the structure of the solar module 1.

Therefore, the strength of the solar module 1 including the reinforcing frame member 30 can be improved without significantly changing or modifying the structure of the solar module 1. As a result, the solar module 1 can be easily manufactured, and an increase in the manufacture time, cost, and the like can be prevented.

In the solar module 1 above, the reinforcing-frame supporting member 40 is formed so that the width of the crotch portion 45 of the reinforcing-frame supporting member 40 is greater than that of a portion of the reinforcing frame member 30 where the reinforcing-frame supporting member 40 and the reinforcing frame member 30 intersect.

Therefore, when the reinforcing-frame supporting member 40 is installed to span between the sub-frame members 20 while the reinforcing-frame supporting member 40 intersects the reinforcing frame member 30, the reinforcing-frame supporting member 40 can be caused to intersect the reinforcing frame member 30 at an angle smaller than a right angle.

Therefore, the reinforcing-frame supporting member 40 can be easily caused to intersect the reinforcing frame member 30, whereby the solar module 1 can be easily manufactured. Therefore, an increase in the manufacture time, cost, and the like can be prevented.

In the solar module 1 above, the gap 48 is formed between the upper surface of the top plate 41 of the reinforcing-frame supporting member 40 and the back surface of the solar cell panel 2. As a result, the reinforcing-frame supporting member 40 can be installed to span between the sub-frame members 20 while the reinforcing-frame supporting member 40 intersects the reinforcing frame member 30, easily and without damaging the back surface of the solar cell panel 2.

In the solar module 1 of this embodiment, in order to improve the strength of the structure of the solar module 1, the reinforcing frame member 30 is provided to span between the main frame members 10 at the back surface of the solar cell panel 2. To the solar module 1 including the reinforcing frame member 30, the reinforcing-frame supporting member 40 is additionally provided to span between the sub-frame members 20 at the back surface of the solar cell panel 2.

In other words, the solar module 1 above including both the reinforcing frame member 30 and the reinforcing-frame supporting member 40 has structural strength sufficient to endure during use in snowy areas.

In some environments in which the solar module 1 is placed, the solar module 1 that includes the reinforcing frame member 30, but not the reinforcing-frame supporting member 40, can be sufficiently used. Therefore, the solar module that includes the reinforcing frame member 30, but not the reinforcing-frame supporting member 40, can be used as a finished product.

If it is necessary to improve the strength of the finished solar module product that includes the reinforcing frame member 30, but not the reinforcing-frame supporting member 40 so that the solar module can be used in an environment, such as a snow environment or the like, the reinforcing-frame supporting member 40 may be used as a solar module support when the solar module is installed at an installation site, whereby the solar module sufficiently ensures during use in a snowy area or the like.

In such a case, the reinforcing-frame supporting member 40 that is used as a solar module support can be manufactured and transported separately from the solar module. Therefore, as described above, the reinforcing-frame supporting member 40 is preferably made of a steel plate instead of aluminum in terms of strength.

According to the solar module support above, the reinforcing-frame supporting member 40 that is the solar module support has the crotch portion 45 having a concave shape that straddles the bottom surface of the reinforcing frame member 30 from below. Therefore, the reinforcing-frame supporting member 40 that is the solar module support can be installed to span between the sub-frame members 20 while the reinforcing-frame supporting member 40 intersects the reinforcing frame member 30, without changing or modifying the reinforcing frame member 30.

Therefore, the reinforcing-frame supporting member 40 that is the solar module support can be attached to the solar module including the reinforcing frame member 30, but not the reinforcing-frame supporting member 40, without significantly changing or modifying the structure of the solar module 1.

Therefore, the strength of the solar module including the reinforcing frame member 30 can be improved without significantly changing or modifying the structure of the solar module. As a result, the solar module can be easily installed at an installation site, and an increase in the installation time, cost, and the like can be prevented.

The solar module including the reinforcing frame member 30 made of aluminum and the reinforcing-frame supporting member 40 made of a steel plate, and the solar module including the reinforcing frame member 30 made of aluminum that is reinforced using the reinforcing-frame supporting member 40 made of a steel plate as a solar module support when the solar module is installed at an installation site, can both have the following operations and advantages.

For example, there may be a disadvantage with a solar module including main frame members, sub-frame members, and a reinforcing frame member that are made of a light weight material, such as aluminum or the like, when used in snowy areas. Specifically, for example, when the solar module is placed on a sloped roof with the sub-frame member being closer to the eaves, sliding snow may press the sub-frame member to open a portion of the sub-frame member that clamps the solar cell panel, so that the solar cell panel may be removed from the sub-frame member.

In such a case, the use of a reinforcing-frame supporting member having a higher stiffness than that of the reinforcing frame member for the solar module has the following advantage. Specifically, the reinforcing-frame supporting member of the solar module can sufficiently support the reinforcing frame member supporting the load of the solar cell panel at a portion where the reinforcing-frame supporting member and the reinforcing frame member intersect. In addition, the reinforcing-frame supporting member is provided to span between a pair of the sub-frame members, and therefore, the distance between the sub-frame members can be maintained constant, whereby the portion of the sub-frame member clamping the solar cell panel can be prevented from being opened.

The stiffness of the reinforcing-frame supporting member is greater than that of the reinforcing frame member. Therefore, even when the reinforcing frame member may be bent by, for example, snow, the reinforcing-frame supporting member can be prevented from being bent. Therefore, even if the reinforcing frame member is bent and the back surface of the solar cell panel cannot be prevented from being bent, the back surface of the bent solar cell panel can be supported by the reinforcing-frame supporting member, which is not bent, whereby the solar cell panel can be prevented from being damaged.

In the solar module 1 of this embodiment, the reinforcing-frame supporting member 40 has the crotch portion 45 having a concave shape. The reinforcing-frame supporting member 40, however, only needs to be provided to span between the sub-frame members 20 while the reinforcing-frame supporting member 40 intersects the reinforcing frame member 30, and the reinforcing-frame supporting member 40 does not necessarily need to have the crotch portion 45 having a concave shape. Specifically, the reinforcing-frame supporting member 40 only needs to have a structure such that the reinforcing-frame supporting member 40 supports the reinforcing frame member 30 by abutting the bottom surface of the reinforcing frame member 30 at a portion where the reinforcing-frame supporting member 40 intersects the reinforcing frame member 30, and may not need to have the crotch portion 45 having a concave shape.

### Description of Reference Characters

- 1: solar module
- 2: solar cell panel
- 3: output terminal box
- 7: screw
- 8: screw
- 10: main frame member
- 11: main outer wall
- 12: upper main holding piece
- 13: lower main holding piece
- 14: main bottom end piece
- 15: main inner wall
- 16: main bottom piece
- 16a: slit
- 16b: screw hole
- 16c: step
- 17: main inner space
- 18: main inner wall hollow portion
- 19: screw receiving portion
- 20: sub-frame member
- 21: sub-outer wall
- 22: upper sub-holding piece
- 23: sub-holding piece
- 24: sub-bottom piece
- 25: sub-inner wall
- 26: sub-bottom piece
- 26a: screw hole
- 27: sub-inner space
- 28: sub-outer wall end portion
- 29: space
- 30: reinforcing frame member
- 31: upper piece
- 32: wall piece
- 33: lower piece
- 39: screw hole
- 40: reinforcing-frame supporting member
- 41: top plate
- 42: wall
- 43: leg
- 44: fixing piece
- 45: crotch portion
- 48: gap
- 49: screw hole
- 51: upper piece
- 52: wall piece
- 53: lower piece
- 59: screw hole

## Claims

1. A solar module (1) comprising:
a rectangular solar cell panel (2) including a pair of main edges and a pair of sub-edges adjacent to the main edges;
a pair of main frame members (10) each including a main holder configured to clamp the corresponding main edge of the solar cell panel (2) to hold the solar cell panel (2);
a pair of sub-frame members (20) each including a sub-holder configured to clamp the corresponding sub-edge of the solar cell panel (2) to hold the solar cell panel (2) ;
a reinforcing frame member (30) provided to span between the main frame members (10) and configured to support a back surface of the solar cell panel (2) ; and
a reinforcing-frame supporting member (40) provided to span between the sub-frame members (20) while intersecting the reinforcing frame member (30) and configured to abut a bottom surface of the reinforcing frame member (30) from below to support the reinforcing frame member (30).

2. The solar module (1) of claim 1, comprising:
a rectangular solar cell panel (2) including a pair of main edges and a pair of sub-edges adjacent to the main edges;
a pair of main frame members (10) each including a main holder having a U-shaped cross-section and configured to clamp the corresponding main edge of the solar cell panel (2) inside the U-shape to hold the solar cell panel (2), a main wall linked to a lower portion of the main holder and extending downward, and a main bottom piece (16) provided on an inner surface of a lower portion of the main wall and protruding inward;
a pair of sub-frame members (20) each including a sub-holder having a U-shaped cross-section and configured to clamp the corresponding sub-edge of the solar cell panel (2) inside the U-shape to hold the solar cell panel (2), a sub-wall linked to a lower portion of the sub-holder and extending downward, and a sub-bottom piece (26) provided on an inner surface of a lower portion of the sub-wall and protruding inward;
a reinforcing frame member (30) provided to span between the main frame members (10) and configured to support a back surface of the solar cell panel (2); and
a reinforcing-frame supporting member (40) provided to span between the sub-frame members (20) while intersecting the reinforcing frame member (30) and configured to abut a bottom surface of the reinforcing frame member (30) from below to support the reinforcing frame member (30).

3. A solar module support, wherein
the solar module (1) includes:
a rectangular solar cell panel (2) including a pair of main edges and a pair of sub-edges adjacent to the main edges;
a pair of main frame members (10) each including a main holder configured to clamp the corresponding main edge of the solar cell panel (2) to hold the solar cell panel (2);
a pair of sub-frame members (20) each including a sub-holder configured to clamp the corresponding sub-edge of the solar cell panel (2) to hold the solar cell panel (2);
a reinforcing frame member (30) provided to span between the main frame members (10) and configured to support a back surface of the solar cell panel (2), and
the support includes:
a reinforcing-frame supporting member (40) provided to span between the sub-frame members (20) while intersecting the reinforcing frame member (30) and configured to abut a bottom surface of the reinforcing frame member (30) from below to support the reinforcing frame member (30).

4. The solar module support of claim 3, wherein
the solar module (1) includes:
a rectangular solar cell panel (2) including a pair of main edges and a pair of sub-edges adjacent to the main edges;
a pair of main frame members (10) each including a main holder having a U-shaped cross-section and configured to clamp the corresponding main edge of the solar cell panel (2) inside the U-shape to hold the solar cell panel (2), a main wall linked to a lower portion of the main holder and extending downward, and a main bottom piece (16) provided on an inner surface of a lower portion of the main wall and protruding inward;
a pair of sub-frame members (20) each including a sub-holder having a U-shaped cross-section and configured to clamp the corresponding sub-edge of the solar cell panel (2) inside the U-shape to hold the solar cell panel (2), a sub-wall linked to a lower portion of the sub-holder and extending downward, and a sub-bottom piece (26) provided on an inner surface of a lower portion of the sub-wall and protruding inward;
a reinforcing frame member (30) provided to span between the main frame members (10) and configured to support a back surface of the solar cell panel (2), and
the support includes:
a reinforcing-frame supporting member (40) provided to span between the sub-frame members (20) while intersecting the reinforcing frame member (30) and configured to abut a bottom surface of the reinforcing frame member (30) from below to support the reinforcing frame member (30).

5. The solar module (1) or solar module support of any one of claims 1-4, wherein
the reinforcing-frame supporting member (40) has a concave portion straddling the bottom surface of the reinforcing frame member (30) from below at a portion where the reinforcing-frame supporting member (40) intersects the reinforcing frame member (30), a bottom surface of the concave portion abuts the reinforcing frame member (30), and the concave portion of the reinforcing-frame supporting member (40) has a width greater than that of the portion of the reinforcing frame member (30) where the reinforcing frame member (30) intersects the reinforcing-frame supporting member (40).

6. The solar module (1) or solar module support of any one of claims 1-5, wherein
the reinforcing-frame supporting member (40) is fixed to the sub-frame members (20) by lower surfaces of opposite end portions of the reinforcing-frame supporting member (40) abutting upper surfaces of the sub-bottom pieces (26) of the respective corresponding sub-frame members (20).

7. The solar module (1) or solar module support of any one of claims 1-6, wherein
the reinforcing-frame supporting member (40) has an upper surface facing the back surface of the solar cell panel (2) with a gap (48) being provided between the upper surface of the reinforcing-frame supporting member (40) and the back surface of the solar cell panel (2).

8. The solar module (1) or solar module support of any one of claims 1-7, wherein
the reinforcing-frame supporting member (40) has a stiffness greater than that of the reinforcing frame member (30).

9. The solar module (1) or solar module support of any one of claims 1-8, wherein
the reinforcing frame member (30) includes a plate-shaped upper piece (31) and lower piece (33), and a wall piece (32) linking the upper piece (31) and the lower piece (33), and a region including an edge of each of opposite end portions of the upper piece (31) close to the corresponding main frame member (10) and extending from the edge along the wall piece (32) is cut away so that the upper piece (31) and the main bottom pieces (16) of the main frame members (10) do not overlap,
the main bottom piece (16) of each of the main frame members (10) has a slit (16a) extending outward from a tip end of the main bottom piece (10), and
the wall piece (32) of the reinforcing frame member (30) is put into the slits (16a) of the main bottom pieces (16) of the main frame members (10) so that an upper surface of each of opposite end portions of the lower piece (33) closer to the corresponding main frame member (30) abuts a lower surface of the main bottom piece (16) of the corresponding main frame member (10), whereby the reinforcing frame member (30) is fixed to the main frame members (10), and the upper piece (31) of the reinforcing frame member (30) is bonded with the back surface of the solar cell panel (2).

10. A photovoltaic power generation system comprising at least a solar module (1) and a solar module support,
wherein the solar module (1) or the solar module is that of claim 1 or 9.
